Europäisches Patentamt

European Patent Office

Office européen des brevets

(11) Veröffentlichungsnummer: **0 419 935 B1**

(12) **EUROPÄISCHE PATENTSCHRIFT**

(45) Veröffentlichungstag der Patentschrift: **17.08.94**

(51) Int. Cl.5: **H04M 19/00**

(21) Anmeldenummer: **90117478.9**

(22) Anmeldetag: **11.09.90**

(54) **Teilnehmeranschlussschaltung für den Anschluss einer Teilnehmeranschlussleitung an die Vermittlungsstelle eines digitalen Zeitmultiplex-Fernmeldesystems.**

(30) Priorität: **27.09.89 DE 3932257**

(43) Veröffentlichungstag der Anmeldung:
**03.04.91 Patentblatt 91/14**

(45) Bekanntmachung des Hinweises auf die Patenterteilung:
**17.08.94 Patentblatt 94/33**

(84) Benannte Vertragsstaaten:
**AT BE CH DE ES FR GB GR IT LI LU NL SE**

(56) Entgegenhaltungen:
**EP-A- 0 048 940**
**EP-A- 0 201 635**
**EP-A- 0 217 130**

**ELECTRICAL COMMUNICATIONS, Band 44, Nr. 4, 1969, Seiten 340-347; D. FISCHBURG et al.: "Balanced electronic receiver for loop signaling"**

**IEEE INTERNATIONAL SOLID-STATE CIR-CUITS CONFERENCE, Band 24, Februar 1981, Seiten 246-247,277; D.W. AULL et al.: "A 60V IC for a transformerless trunk and subscriber line interface"**

(73) Patentinhaber: **SIEMENS AKTIENGESELL-SCHAFT**
**Wittelsbacherplatz 2**
**D-80333 München (DE)**

(72) Erfinder: **Ossler, Walter, Dipl.-Ing.**
**Wallbergstrasse 38**
**D-8034 Germering (DE)**
Erfinder: **Rudolf, Hans-Werner, Dr.rer.nat.**
**Wörthstrasse 13**
**D-8000 München 80 (DE)**

**Beschreibung**

Die Erfindung betrifft eine Teilnehmeranschlußschaltung für den Anschluß einer Teilnehmeranschlußleitung an die Vermittlungsstelle eines digitalen Zeitmultiplex-Fernmeldesystems, insbesonder Fernsprechsystems mit einer elektronischen Schnittstellenschaltung, die unter anderem eine von einer Speisespannungsquelle beaufschlagte Speiseschaltung für die Teilnehmerspeisung, über die auch aufgrund von auf die Adern der Teilnehmeranschlußschaltung eingekoppelten Längsspannungen entstehende Längsströme nach einem Erdpotential führenden Schaltungspunkt abgeleitet werden, sowie eine Indikationsschaltung zur Schleifenzustandserkennung aufweist und die im Ruhebetriebszustand zumindest bezüglich ihres die Indikationsschaltung umfassenden Teils von der Speisespannungsquelle abgetrennt ist, in welchem Falle eine zusätzliche externe Indikationsschaltung die Schleifenzustandserkennung übernimmt und die ferner durch eine Schutzschaltung gegen an ihre Eingänge gelangende Überspannungen geschützt ist, die diese auf den Wert der Versorgungsspannung der Teilnehmeranschlußschaltung begrenzt. Die erwähnte Abtrennung der elektronischen Schnittstellenschaltung bei einer solchen Teilnehmeranschlußschaltung dient der Verringerung der Ruheleistung, die auf eine einzelne Schnittstellenschaltung bezogen zwar relativ gering ist für die Vielzahl von Schnittstellenschaltungen, die bei einer Vermittlungsstelle jeweils vorhanden und räumlich benachbart angeordnet sind, jedoch ganz erheblich ist. Da in einem solchen Zustand, der auch als powerdown-Zustand bezeichnet wird, die Bestandteil der Schnittstellenschaltung darstellende jndikationsschaltung nicht mehr arbeitsfähig ist, wird der Aufwand einer gesonderten externen Indikationsschaltung hingenommen, die auch im Ruhezustand der Schnittstellenschaltung eine Versorgungsspannung erhält, für sich gesehen allerdings wesentlich weniger Leistung verbraucht als die gesamte Schnittstellenschaltung.

Bei einer bekannten Teilnehmeranschlußschaltung dieser Art (DE-A-3534890) sind Schaltelemente vorgesehen, durch die die Schnittstellenschaltung im Ruhebetriebszustand sowohl von den Adern der Teilnehmeranschlußleitung als auch zumindest mit Wirkung für einen Teil ihrer Bestandteile von der Speisespannungsquelle abtrennbar ist und durch die andererseits in diesem Betriebszustand die externe Indikationsschaltung an die Adern der Teilnehmeranschlußleitung angeschaltet wird.

Insbesondere dann, wenn es sich bei den Schaltern zum Anschalten der externen Indikationsschaltung um elektronische Schalter handelt, muß der Anschluß so erfolgen, daß die in erster Linie für den Schutz der elektronischen Bauelemente der Schnittstellenschaltung gegen auf die Teilnehmeranschlußleitung eingekoppelten Überspannungen auch diese elektronischen Schalter gegen Überspannungen schützt.

Die Speiseschaltung der Schnittstellenschaltung dieser bekannten Teilnehmeranschlußschaltung ist so konzipiert, daß sie Längsströme, die aufgrund von Längsspannungen fließen, die durch induktive Einkopplung von Fremdspannungen auf die Teilnehmeranschlußleitungsadern entstehen, niederohmig gegen einen Erdpotential führenden Schaltungspunkt ableitet. Auf diese Weise wird verhindert, daß durch die Längsspannungen am Eingang der Schnittstellenschaltung Spannungshübe entstehen, die die Schutzschaltung zum Ansprechen bringen.

Wenn nun aber im Ruhebetriebszustand der Schnittstellenschaltung eine solche niederohmige Ableitung der Längsströme durch die Schnittstellenschaltung nicht mehr gegeben ist, überlagern sich die Längsspannungen der in diesem Fall an den Adern der Teilnehmeranschlußleitung liegende Gleichsspannung und führen bei Überschreiten eines bestimmten Wertes zum Ansprechen der Schutzschaltung, wodurch sie auf die Versorgungsspannung der Schnittstellenschaltung begrenzt werden. Es kommt dann zu einer Querspannung zwischen den Leitungsadern, die die externe Indikationsschaltung ansprechen läßt, obwohl sich am Schleifenzustand nichts geändert hat.

Die Aufgabe der Erfindung besteht darin, eine Teilnehmeranschlußschaltung der eingangs genannten Art anzugeben, bei der die erwähnten Schalter zum Abtrennen der Schnittstellenschaltung und zum Anschalten der externen Indikationsschaltung entfallen können, die ferner in gewissem Ausmaß längsspannungsfest ist und außerdem die übertragungstechnischen Werte der Teilnehmeranschlußleitung möglichst wenig beeinträchtigt.

Diese Aufgabe wird erfindungsgemäß dadurch gelost, daß die externe Indikationsschaltung ein symmetrisches hochohmiges Widerstandsnetzwerk, das fest an die Adern der Teilnehmeranschlußleitung angeschlossen ist, sowie ein Indikationselement umfaßt, und daß ihre Versorgungsspannung um einen das Ansprechen der Schutzschaltung im Ruhebetriebszustand der Schnittstellenschaltung aufgrund von Längsspannungen bestimmenden Wert unter dem Wert der Versorgungsspannung der Schnittstellenschaltung liegt.

Die feste Anschaltung der externen Indikationsschaltung bei der erfindungsgemäßen Teilnehmeranschlußschaltung, die zur Vermeidung der erwähnten Schalter führt, hat wegen der symmetrischen und hochohmigen Ausführung des Widerstandsnetzwerkes, keine nachteiligen Auswirkungen auf die übertragungstechnischen Eigenschaften der Teilnehmeranschlußschaltung, außerdem ist durch die erfindungsgemäß vorgesehene Werterelation zwischen Versorgungsspannung der Indikationsschaltung und Versorgungsspannung der Schnittstellenschaltung, auf die durch die Schutzschaltung eine Begrenzung erfolgt, für auftretende Längsspannungen ein gewisser Spielraum vorhanden, so daß die Schutzschaltung nur bei relativ selten auftretenden hohen Werten der Längsspannungen zum Ansprechen kommt.

Gemäß einer weiteren Ausgestaltung der Erfindung, bei der das Indikationselement in Form eines als Komparator geschalteten Operationsverstärkers realisiert ist, werden die Betriebsspannung sowie die den Eingang des Operationsverstärkers des Widerstandsnetzwerks der Indikationsschaltung beaufschlagende Vorspannungen jeweils durch Spannungsteiler aus der Versorgungsspannung der Schnittstellenschaltung gewonnen. Es sind hier also keine gesonderten Spannungswandler für die Versorgungsspannungserzeugung der externen Indikationsschaltung erforderlich. Gemäß einer noch anderen weiteren Ausgestaltung der Erfindung sind einzelne der Widerstände des symmetrischen Widerstandsnetzwerks, über das die externe Indikationsschaltung an die Adern der Teilnehmeranschlußschaltung angeschlossen ist, gleichzeitig als Widerstände der vorerwähnten Spannungsteiler ausgenutzt, so daß der Gesamtaufwand an Widerständen reduziert ist.

Noch eine andere weitere Ausgestaltung der Erfindung geht dahin, im Falle des Ansprechens der Schutzschaltung im Ruhebetriebszustand der Schnittstellenschaltung diese wieder in ihren Arbeitsbetriebszustand zu versetzen, in der sie wieder von der Speisespannungsquelle beaufschlagt wird und ihre interne Indikationsschaltung die Schleifenzustandserkennung übernimmt. Es ist hier dem, wie angegeben, relativ seltenen Fall Rechnung getragen, daß trotz der erfindungsgemäßen Maßnahmen Längsspannungen zu einem fehlerhaften Ansprechen der externen Indikationsschaltung führen können. Wenn in diesem Fall die Schnittstellenschaltung wieder in ihren Betriebszustand übergeht, werden, wie dargelegt, die auf die Längsspannungen zurückführenden Längsströme gegen Erde abgeleitet und damit ein Ansprechen der Schutzschaltung aufgrund dieser Längsspannungen vermieden, so daß ein ggf. erfolgendes Ansprechen der internen Indikationsschaltung tatsächlich auf eine Änderung des Schleifenzustands zurückzuführen ist.

Nachstehend wird die Erfindung anhand eines Ausführungsbeispiels unter Bezugnahme auf die Zeichnung näher erläutert.

In der Zeichnung zeigen:

FIG 1 ein Übersichtsschaltbild, das den Zusammenhang von Teilnehmeranschlußleitung, Schutzschaltung, externer Indikationsschaltung und Teilnehmeranschlußschaltung veranschaulicht,

FIG 2 ein Zeitdiagramm, das die für die Schutzschaltung maßgeblichen Spannungs- und Schwellenverhältnisse darstellt,

FIG 3 die Grundschaltung der erfindungsgemäßen externen Indikationsschaltung,

FIG 4 eine der Darstellung in FIG 3 entsprechende Darstellung zur Veranschaulichung der Doppelausnutzung von Widerständen des Widerstandsnetzwerks zur Anschaltung der Indikationsschaltung.

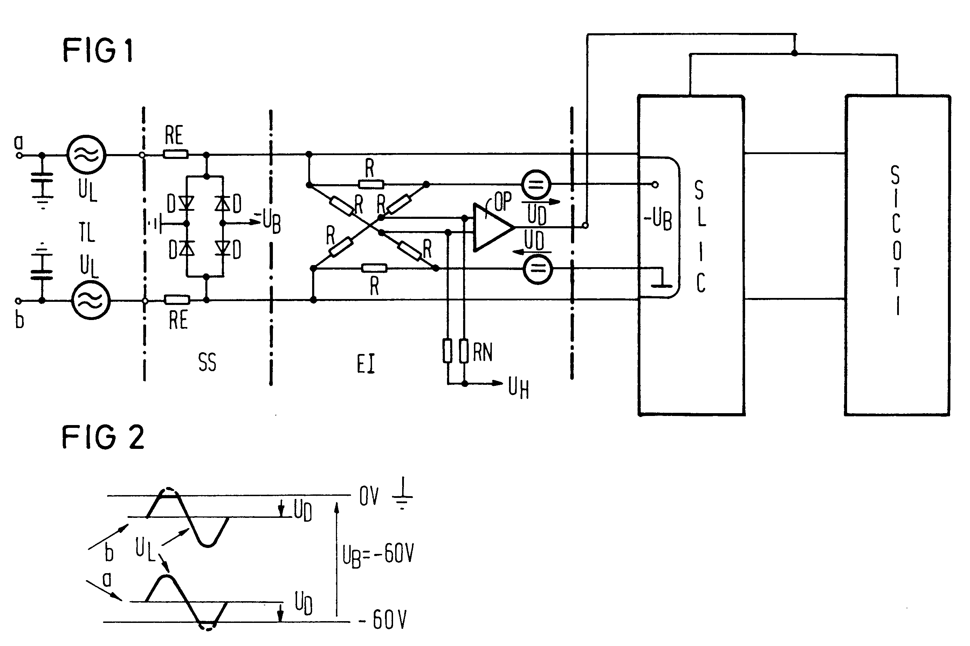

In FIG 1 ist von einer Teilnehmeranschlußschaltung für den Anschluß einer Teilnehmeranschlußleitung TL mit den Adern a und b eine elektronische Schnittstellenschaltung SLIC sowie ein Schaltungsteil SICOFI angedeutet.

Die Schnittstellenschaltung SLIC übernimmt im wesentlichen die Aufgabe der Teilnehmerleitungsspeisung, wozu sie eine von einer Speisespannungsquelle beaufschlagte Speiseschaltung aufweist, die Schleifenzustandsüberwachung, wozu sie mit einer internen Indikationsschaltung versehen ist, sowie der Rufeinspeisung und der Durchführung verschiedener Überwachungsaufgaben.

Die Aufgaben des Bausteins SICOFI bestehen in der Analog-Digital-Umsetzung der von der Teilnehmeranschlußleitung empfangenen Sprachsignalinformationen sowie umgekehrt der Digital-Analog-Wandlung der von der Vermittlungsstelle, zu der diese Teilnehmeranschlußschaltung gehört, kommenden und auf die Teilnehmeranschlußleitung weiterzugebenden digitalen Sprachsignalinformationen, sowie der zugehörigen Bandbegrenzung. Ferner wird durch diesen Baustein mittels eines Filters die Eingangsimpedanz der Teilnehmeranschlußschaltung eingestellt und eine Gabelfunktion zwischen der zweidrähtigen Teilnehmeranschlußleitung und dem vierdrähtig durchschaltenden Koppelfeld der Vermittlungsstelle realisiert.

Im Ruhebetriebszustand ist die Schnittstellenschaltung SLIC aus Gründen der Stromersparnis zumindest im Hinblick auf ihre einen größeren Strombedarf aufweisenden Bestandteile, zu denen auch die erwähnte interne Indikationsschaltung gehört, von der die Versorgungsspannung -UB gelieferten Spepisespannungsquelle abgetrennt.

Um auch im Ruhezuzstsand eine Schleifenzustandsänderung, bei der es sich in diesem Fall um einen aufgrund des Abnehmens des Hörers beim Teilnehmer erfolgenden Schleifenschluß handeln wird, erkennen zu können, ist eine externe Indikationsschaltung EI vorgesehen, die ein symmetrisches aus den hochohmigen Widerstanden R bestehendes Widerstandsnetzwerk, das über Eingangswiderstände RE fest an die Adern a und b der Teilnehmeranschlußleitung TL angeschlossen ist, sowie ein Indikationselement in Form eines als Komperator geschalteten Operationsverstärkers OP umfaßt.

Die FIG 1 zeigt ferner eine Schutzschaltung SS, die als aus Dioden D bestehende Brückenschaltung realisiert ist, deren eine Brückendiagonale zwischen den Adern a und b der Teilnehmeranschlußleitung TL angeschlossen ist und an deren anderer Brückendiagonale zwischen einem Erdpotential führenden Schaltungspunkt und einen die Versorungsspannung -UB der Schnittstellenschaltung führenden Schaltungspunkt angeschlossen ist.

Auf die Adern a und b der Teilnehmeranschlußleitung TL können beispielsweise aufgrund von Strömen in der Teilnehmeranschlußleitung benachbart geführten Energieversorgungleitungen Längsspannungen induziert werden, die auf beiden Leitungsadern mit derselben Polarität auftreten und die in der FIG durch Wechselspannungsquellen UL symbolisiert sind. Im Arbeitsbetriebszustand der Schnittstellenschaltung SLIC sind dort für die aufgrund dieser Langspannungen fließenden Längsströme Ableitpfade zu einem Erdpotential führenden Schaltungspunkt wirksam geschaltet, womit vermieden ist, daß an den Schnittstelleneingängen Spannungshübe der Größenordnung entstehen, die zum Ansprechen der Schutzschaltung SS führen. Diese Schutzschaltung kann während des Arbeitsbetriebszustands der Schnittstellenschaltung demnach nur ansprechen, wenn sehr große Fremdspannungen auf die Leitungsadern gelangen, die beispielsweise von einem Blitzeinschlag herrühren.

Wenn im Ruhebetriebszustand der Schnittstellenschaltung diese ganz oder teilweise von der Speisespannungsquelle abgetrennt ist, dann überlagert sich die eingekoppelte Längsspannung der auf den Adern der Teilnehmeranschlußleitung herrschenden Gleichspannung, bei der es sich nunmehr um die von der Indikationsschaltung angelegte Spannung handelt, die im wesentlichen deren Betriebsspannung gleicht. Die Spannung an den Sprechadern wird durch die Schutzschaltung SS, wie angedeutet, auf die Versorgungsspannung -UB bzw. auf Erdpotential begrenzt, in welchem Falle dort bei gleicher Polarität der Längsspannungen auf den Leitungsadern eine Querspannung entsteht, die die externe Indikationsschaltung fälschlicherweise zum Ansprechen bringt.

Erfindungsgemäß wird die externe Indikationsschaltung EI daher so ausgelegt, daß ein solches Ansprechen der Schutzschaltung SS erst bei Längsspannungen relativ großer Amplitude erfolgt, die in der Praxis relativ selten auftreten. Dies wird dadurch erreicht, daß die externe Indikationsschaltung mit einer Betriebsspannung, die ja wie dargelegt, im Ruhebetriebszustand der Schnittstellenschaltung die Gleichspannung an den Leitungsadern bestimmt, um einen vorgegebenen Differenzbetrag unter der Versorgungsspannung der Schnittstellenschaltung liegt, auf die die Begrenzung durch die Schutzschaltung SS erfolgt. In der FIG 1 ist diese Differenzspannung durch die Gleichspannungsquellen UD angedeutet.

Wie die FIG 2 zeigt, können die Längsspannungen auf den Adern a und b die Amplitude UD annehmen, bevor es zu einem Ansprechen der Schutzschaltung und damit fälschlichen Ansprechen der externen Indikationsschaltung EI kommt, was dann Jedoch wegen des seltenen Auftretens eines solchen Falles hingenommen werden kann.

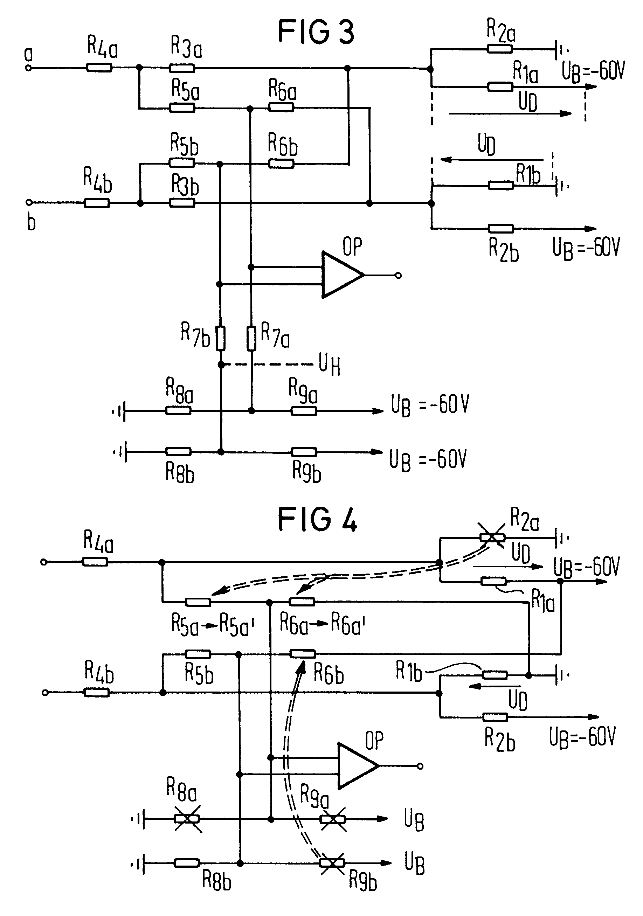

In der FIG 3 ist die externe Indikationsschaltung EI in einer Version gemäß einer weiteren Ausgestaltung der Erfindung dargestellt.

Auch hier ist das eigentliche Indikationsorgan wieder ein Operationsverstärker OP. Die Widerstände R3a, R3b; R5a, R5b und R6a, R6b bilden das Widerstandsnetzwerk entsprechend dem aus den Widerständen R gebildeten Widerstandsnetzwerk gemäß FIG 1. Die Widerstände R7a und R7b entsprechen den Widerständen RN und die Widerstände R4a und R4b den Eingangswiderständen RE gemäß FIG 1.

Die Versorgungsspannung für den Operationsverstärker OP wird hier mit Hilfe von aus den Widerständen R1a , R2a bzw. R1b, R2b bestehenden Spannungsteilern geliefert, die jeweils zwischen der negativen Versorgungsspannung -UB der Schnittstellenschaltung und einem Erdpotential führenden Schaltungspunkt betrieben werden und für den Operationsverstärker eine Versorgungsspannung liefern, die, wie gewünscht, um den Betrag UD niedriger als die Versorgungsspannung der Schnittstellenschaltung ist.

Die Eingänge des Operationsverstärkers werden über die erwahnten Widerstände R7a und R7b von einer Hilfsspannung UH beaufschlagt, die mittels aus den Widerständen R8a, R9a bzw. R8b, R9b bestehenden und zwischen Erdpotential und dem Potential -UB betrieben Spannungsteilern erzeugt wird. Durch diese Hilfsspannung wird erreicht, daß die Eingangsspannungen des Operationsverstärkers auch bei Extremwerten der eingekoppelten Längsspannungen noch im bauartbedingten zulässigen Bereich bleiben.

Anhand der FIG 4 ist veranschaulicht, wie sich die Schaltungsanordnung gemäß FIG 3 dadurch vereinfachen läßt, daß die Funktion einzelner Spannungsteilerwiderstände von den Widerständen des Widerstandsnetzwerkes zur Ankopplung des Operationsverstärkers an die Adern a und b der Teilnehmeranschlußleitung übernommen werden. So kann der Widerstand Ra des einen die Betriebsspannung für den Operationsverstärkers liefernden Spannungsteils R1a/R2a entfallen, wozu die Widerstände R5a und R6a des Widerstandsnetzwerkes entsprechend als Widerstände R5a′ und R6a′ dimensioniert sein müssen. Ferner ist erforderlich, daß sowohl dieser als auch der die Widerstände R5b und R6b umfassende Zweig des Widerstandsnetzwerkes nicht wie in FIG 3 von der Versorgungsspannung der Indikationsschaltung, sondern von der Versorgungsspannung -UB der Schnittstellenschaltung beaufschlagt wird. Unter entsprechender Berücksichtigung der Dimensionierung der Widerstände R5a′ und R6a′ kann der aus den Widerständen R8a und R9a gebildete Spannungsteiler entfallen.

Die FIG 4 zeigt außerdem, daß die Funktion des Widerstandes R9b des aus den Widerständen R8b und R9b bestehenden Spannungsteilers bei entsprechender Dimensionierung des Widerstandes R6b durch diesen Widerstand übernommen werden kann. Die Dimensionierung für die erwähnte Mehrfachfunktion übernehmenden Widerstände ergibt sich aus den nachfolgenden Bedingungen:

$$R5a′ + R6a′ = (R5b + R6b//R8b)//R2b \text{ und}$$

$$\frac{R5a'}{R6a'} = \frac{R5b}{R6b//R8b},$$

wobei mit // eine Parallelschaltung der entsprechenden Widerstände gemeint ist.

## Patentansprüche

1. Teilnehmeranschlußschaltung für den Anschluß einer Teilnehmeranschlußleitung an die Vermittlungsstelle eines digitalen Zeitmultiplex-Fernmeldesystems, insbesondere Fernsprechsysstems, mit einer elektronischen Schnittstellenschaltung, die unter anderem eine von einer Speisespannungsquelle beaufschlagte Speiseschaltung für die Teilnehmerspeisung, über die auch aufgrund von auf die Adern der Teilnehmeranschlußleitung eingekoppelten Langsspannungen entstehende Längsströme nach einem Erdpotential führenden Schaltungspunkt abgeleitet werden, sowie eine Indikationsschaltung zur Schleifenzustandserkennung aufweist und die im Ruhebetriebzustand zumindest bezüglich ihres die Indikationsschaltung umfassenden Teils von der Speisespannungsquelle abgetrennt ist, in welchem Falle eine zusätzliche externe Indikationsschaltung die Schleifenzustandserkennung übernimmt, und die ferner durch eine Schutzschaltung wegen Überspannungen geschützt ist, die diese auf den Wert der Versorgungsspannung der Teilnehmeranschlußschaltung begrenzt,
**dadurch gekennzeichnet**,
daß die externe Indikationsschaltung (EJ) ein symmetrisches hochohmiges Widerstandsnetzwerk (R; R3a bis R6b), das fest an die Adern (a, b) der Teilnehmeranschlußleitung (TL) angeschlossen ist sowie ein Indikationselement umfaßt, und daß ihre Versorgungsspannung um einen das Ansprechen der Schutzschaltung (SS) im Ruhebetriebzustand der Schnittstellenschaltung (SLIC) aufgrund von Längsspannungen bestimmenden Wert (UD) unter dem Wert der Versorgungsspannung (-UB) der Schnittstellenschaltung liegt.

2. Teilnehmeranschlußschaltung nach Anspruch 1,
**dadurch gekennzeichnet**,
daß das Indikationselement in Form eines als Komparator geschalteten Operationsverstärkers (OP) realisiert ist, und daß die Betriebsspannung der Indikationsschaltung, sowie die dem Eingang des Operationsverstärkers beaufschlagenden Vorspannungen (UH) jeweils durch Spannungsteiler (R1a/ R2a, R1b/R2b; R8a/R9a, R8b, R9b) aus der Versorgungsspannung (-UB) der Schnittstellenschaltung (SLIC) gewonnen werden.

3. Teilnehmeranschllußschaltung nach Anspruch 2,
**dadurch gekennzeichnet**,
daß einzelne der Widerstände (R5a, R6a, R6b) des symmetrischen Widerstandsnetzwerks gleichzeitig als Widerstände der genannten Spannungsteiler ausgenutzt sind.

4. Teilnehmeranschlußschaltung nach einem der vorhergehenden Ansprüche,
**dadurch gekennzeichnet**,
daß im Falle des Ansprechens der Schutzschaltung (SS) im Ruhebetriebzustand der Schnittstelltenschaltung (SLIC) diese wieder in ihren Arbeitsbetriebzustand versetzt wird, in der sie wieder von der Speisespannungsquelle (-UB) beaufschlagt wird und ihre interne Indikationsschaltung die Schleifenzustandserkennung übernimmt.

## Claims

1. Subscriber line circuit for connecting a subscriber line to the exchange of a digital time-division multiplex telecommunications system, particularly a telephone system, with an electronic interface circuit which, among others, exhibits a power-feeding circuit, to which a feed voltage source is applied, for feeding power to the subscriber, via which the longitudinal currents produced due to longitudinal voltages coupled into the wires of the subscriber line are also bypassed to a circuit point carrying earth potential, and an alarm indicating circuit for detecting the loop state, and which is disconnected from the feed voltage source, at least with respect to its section comprising the alarm indicating circuit, in the idle state, in which case an additional external alarm indicating circuit takes over the loop status detection, and which is also protected by a protective circuit against overvoltages, which limits the latter to the value of the supply voltage of the subscriber line circuit, characterized in that the external alarm indicating circuit (EJ) comprises a balanced high-impedance resistance network (R; R3a to R6b) which is permanently connected to the wires (a, b) of the subscriber line (TL), and an alarm indicating element, and in that its supply voltage is below the value of the supply voltage (-UB) of the interface circuit by a value (UD) determining the operation of the protective circuit (SS) in the idle state of the interface circuit (SLIC) due to longitudinal voltages.

2. Subscriber line circuit according to Claim 1, characterized in that the alarm indicating element is implemented in the form of an operational amplifier (OP) connected as comparator, and in that the operating voltage of the alarm indicating circuit, and the bias voltages (UH) applied to the input of the operational amplifier, are in each case obtained from the supply voltage (-UB) of the interface circuit (SLIC) by means of voltage dividers (R1a/R2a, R1b/R2b; R8a/R9a, R8b, R9b).

3. Subscriber line circuit according to Claim 2, characterized in that individual ones of the resistors (R5a, R6a, R6b) of the balanced resistance network are at the same time used as resistors for the said voltage dividers.

4. Subscriber line circuit according to one of the preceding claims, characterized in that if the protective circuit (SS) is operated in the idle state of the interface circuit (SLIC), the latter is put back into its operating state in which the feed voltage source (-UB) is again applied to it and its internal alarm indicating circuit takes over the loop status detection.

**Revendications**

1. Circuit de raccordement d'abonné pour le raccordement d'une ligne d'abonné au central d'un système de télécommunication numérique à multiplexage dans le temps, en particulier d'un système téléphonique, ayant un circuit d'interface électronique, qui comporte entre autres un circuit d'alimentation de l'abonné, qui est alimenté par une source de tension d'alimentation et par l'intermédiaire duquel des courants longitudinaux, produits du fait de tensions longitudinales présentes sur les conducteurs de la ligne de raccordement d'abonné, sont également dérivés vers un point du circuit au potentiel de la terre, ainsi qu'un circuit indicateur pour la reconnaissance de l'état de boucle, ce circuit d'interface électronique étant séparé à l'état de repos, au moins en ce qui concerne sa partie comprenant le circuit indicateur, de la source de tension d'alimentation, un circuit indicateur externe supplémentaire prenant en charge dans ce cas la reconnaissance de l'état de boucle, le circuit d'interface électronique étant protégé des surtensions par un circuit protecteur, qui les limite à la valeur de la tension d'alimentation du circuit de raccordement d'abonné,
caractérisé en ce que
le circuit indicateur externe (EJ) comprend un circuit résistif symétrique haute impédance (R : R3a à R6b), qui est connecté de façon fixe aux conducteurs (a, b) de la ligne (TL) de raccordement d'abonné, ainsi qu'un élément indicateur, et sa tension d'alimentation est plus petite que la valeur de la tension (-UB) d'alimentation du circuit d'interface, d'une valeur (UD) déterminant la mise en fonction du circuit protecteur (SS) à l'état de repos du circuit d'interface (SLIC) du fait de tensions longitudinales.

2. Circuit de raccordement d'abonné selon la revendication 1,
caractérisé en ce que
l'élément indicateur est réalisé sous forme d'un amplificateur opérationnel (OP) monté en tant que comparateur, et en ce que l'on obtient la tension de fonctionnement du circuit indicateur, ainsi que les tensions (UH) de polarisation appliquées à l'entrée de l'amplificateur opérationnel, respectivement au moyen de diviseurs (R1a/R2a, R1b/R2b ; R8a/R9a, R8b, R9b) de tension à partir de la tension (-UB) d'alimentation du circuit (SLIC) d'interface.

3. Circuit de raccordement d'abonné selon la revendication 2,
caractérisé en ce que
certaines des résistances (R5a, R6a, R6b) du circuit résistif symétrique sont utilisées en même temps en tant que résistances desdits diviseurs de tension.

4. Circuit de raccordement d'abonné selon l'une des revendications précédentes,
caractérisé en ce que, dans le cas de la mise en fonction du circuit protecteur (SS) à l'état de repos du circuit d'interface (SLIC), on fait passer celui-ci de nouveau à son état de fonctionnement, dans lequel il est de nouveau alimenté par la source (-UB) de tension d'alimentation et son circuit indicateur interne prend en charge la reconnaissance de l'état de boucle.

# FIG 1

# FIG 2

EP 0 419 935 B1

FIG 3

FIG 4